# EUROPEAN PATENT SPECIFICATION

(11) **EP 2 629 627 B1**
(45) Date of publication and mention of the grant of the patent: **26.12.2018**
(21) Application number: 11772884.0
(22) Date of filing: 12.10.2011
(51) Int. Cl.: A23G 3/48, A23G 3/38, A23G 3/42, A23G 3/36, A23G 3/44, A23L 29/275, A23L 29/281, A23L 29/269

(54) **CONFECTIONERY PRODUCTS CONTAINING TEXTURING AGENTS**
SÜSSWAREN MIT TEXTURIERUNGSMITTELN
PRODUITS DE CONFISERIE CONTENANT DES AGENTS DE TEXTURATION

(30) Priority: 21.10.2010 EP 10188342
(43) Date of publication of application: 28.08.2013
(73) Proprietor: Cargill, Incorporated, Wayzata, MN 55391 (US)
(72) Inventor: DE LOBEL, Jan, NL-4901 AV Oosterhout (NL); WIJCKMANS, Koen, B-3001 Heverlee (BE)
(74) Representative: Jantschy, Jasmin
(86) International application number: PCT/EP2011/005112
(87) International publication number: WO 2012/052128

(56) References cited:
- EP-A2- 0 438 912
- WO-A1-96/00509
- WO-A1-2008/055510
- WO-A1-2010/060539
- US-A- 5 098 730
- US-A1- 2010 112 142

## Description

### Field of the Invention

The present invention relates to a confectionery product containing polydextrose and at least two texturing agents.

### Background of the Invention

Recent developments in confectionery manufacture have been the replacement of part or all of the sugar by sugar alcohol (polyol) in the interest of providing a product having a reduced calorie content and a lower tendency to cause tooth decay. Among the polyols which have been proposed for the manufacture of confectionery are isomalt, maltitol, xylitol, erythritol and mixtures thereof.
Within the field of gelled low calorie confectionery products it has been very difficult to find appropriate bulking agents with acceptable sensory properties such as texture, mouth feel etc. and acceptable digestive properties.

JP 3100186 describes an erythritol based candy which is further containing a hydrocolloid.

EP 2 091 346 (or WO 2008/055510) describes a sweet confectionery product with reduced content of sugar and calories. It comprises at least one intense sweetener, at least one texture giving agent and two or more low calorie bulking agents.

EP 0 438 912 describes a reduced calorie non-cariogenic edible compositions containing polydextrose and an encapsulating agent.

US 5,098,730 provides dietetic sweetening compositions of xylitol and a reduced calorie bulking agent, such as polydextrose, in a weight ratio of about 4 to about 0.05 based on dry weight.

US 2010/0112142 describes confectionery products comprising polyols, in particular erythritol.

There is still a further need of having a confectionery product which is showing acceptable sensory properties such as texture, mouth feel etc. and acceptable digestive properties. The current invention provides such a confectionery product.

### Summary of the Invention

The invention is defined in the appended claims. The current invention relates to a confectionery product containing polydextrose characterized in that it further comprises at least two texturing agents selected from a group consisting of a) gelatin, and b) xanthan gum and/or locust bean gum, and polydextrose is present in an amount of 60 to 90% w/w on dry weight and texturing agents in an amount of 10 to 40% w/w on dry weight, and in that the confectionary product is comprising 5-12% w/w gelatin and 0.01-0.35% w/w xanthan gum and/or locust bean gum, wherein the confectionary product is a soft and/or chewable and/or gummy like sweet candy product, preferably a gum, a jelly, or a liquorice.

Furthermore the current invention relates to a process for preparing the confectionery product of the current invention. The present disclosure further relates to a dry mix comprising polydextrose, and at least two texturing agents selected from a group consisting of gelatin, microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum characterized in that polydextrose is present in an amount of 60 to 90% w/w on dry weight and texturing agents in an amount of 10 to 40% w/w on dry weight.

### Detailed Description

The invention is defined in the appended claims. The current invention relates to a confectionery product containing polydextrose characterized in that it further comprises at least two texturing agents selected from a group consisting of gelatin, microbial gums, and locust bean gum, and polydextrose is present in an amount of 60 to 90% w/w on dry weight and texturing agents in an amount of 10 to 40% w/w on dry weight as defined in claim 1.

Confectionery products within the scope of the present invention include solid food compositions that include soft and/or chewable and/or gummy like sweet candy products among which there are gums and jellies, liquorice and other moulded products. Preferably the confectionery product is a jelly. Examples include foamed gums, soft gums, laces, tubes, gummy bears, jelly babies and the like.

Polydextrose as referred to herein, is a water-soluble, low caloric, non-cariogenic bulking agent. It is a randomly cross-linked (branched) glucan polymer (polysaccharide complex) characterised by having predominantly β-1-6 and β-1-4 linkage and which is produced through acid-catalysed condensation of saccharides alone or in the presence of sugar alcohols. Polydextrose can be applied in its powder and/or liquid form. Several studies have been conducted to confirm that polydextrose is safe to infants when polydextrose is added as a dietary ingredient to infant formula. These analyses have confirmed that the diarrheainducing effect of polydextrose is not occurring in children when the dose does not exceed 1g/kg body weight/day.

Furthermore, the confectionery product is comprising texturing agents (= texturising agent).
Texturing agents are invaluable for providing high quality foods with consistent properties, shelf stability and good consumer appeal and acceptance. Texturing agents are defined as compounds being capable of modulating the texture of the product without contributing with a significant increase in energy content. In fact, presence of at least two texturing agent is in most cases fully or partly responsible for the elastic and/or solid properties of the confectionery product of the current invention.

At least two texturing agents are added and are selected from a group consisting of gelatin, microbial gums, and locust bean gum. Mixtures of at least two thereof are applied in the current invention.

Food-grade gelatin is made by aqueous extraction from fish or mammalian collagen such as pig and bovine. It results in a firm, gummy gel structure. Depending on the bloom strength (higher bloom strength giving a harder gel) and concentration, the texture of the confectionery product will be elastic to hard with a rubbery like chew.
The term "microbial gums", as used herein, is intended to mean all gum polysaccharides of microbial origin, i.e. from algae, bacteria or fungi. Examples thereof include, for example, gellan and xanthan gums that are both produced by bacteria. In the claimed invention, the microbial gum used is xanthan gum, a microbial desiccation resistant polymer prepared commercially by aerobic submerged fermentation. Xanthan is an anionic polyelectrolyte with a β-(1,4)-D-glucopyranose glucan backbone having side chains of (3,1)-α-linked D-mannopyranose-(2,1)-β-D-glucuronic acid-(4,1)-β-D-mannopyranose on alternating residues.

Agar agar is a plant-derived gum polysaccharide. The gelling agent is an unbranched polysaccharide obtained from the cell walls of some species of red algae, primarily from the genera Gelidium and Gracilaria, or seaweed.

Another water-soluble dietary fiber is pectin, which is a heterogenous group of acidic polysaccharides found in fruit and vegetables and mainly prepared from waste citrus peel and apple pomace. Pectin has a complex structure, wherein a large part of the structure consists of homopolymeric partially methylated poly-α-(1,4)-D-galacturonic acid residues with substantial hairy non-gelling areas of alternating α-(1,2)-L-rhamnosyl-α-(1,4)-D-galacturonosyl sections containing branch points with mostly neutral side chains (1 to 20 residues) of mainly L-arabinose and D-galactose. The properties of pectins depend on the degree of esterification, which is normally about 70%. The low-methoxy (LM) pectins are less than 40% esterified, while high-methoxy (HM) pectins are more than 43% esterified, usually 67%.
Alginic acid and sodium alginate are vegetable gums of linear polymers containing β-(1,4)-linked D-mannuronic acid and α-(1,4)-linked L-guluronic acid residues produced by seaweeds.

Beta-glucans which are defined to consist of linear unbranched polysaccharides of linked β-(1,3)-D-glucopyranose units in a random order. Beta-glucans occur, for example, in the bran of grains, such as barley, oats, rye and wheat.

Carrageenan is a generic term for polysaccharides prepared by alkaline extraction from red seaweed. Carrageenan includes linear polymers of about 25,000 galactose derivatives. The basic structure of carrageenan consists of alternating 3-linked β-D-gaiactopyranose and 4-linked α-D-galactopyranose units. There are three main classes of commercial carrageenan: the kappa, Iota and lambda carrageenan.

Glucomannan is mainly a straight-chain polymer, with a small amount of branching. The component sugars are β-(1→4)-linked D-mannose and D-glucose in a ratio of 1.6:1. The degree of branching is about 8% through β-(1→6)-glucosyl linkages.

Guar gum, which is defined as a galactomannan consisting of a α-(1,4)-linked β-D-mannopyranose backbone with branch points from their 6-positions linked to α-D-galactose.

It is non-ionic and typically made up of about 10,000 residues. Guar gum is highly water-soluble and, for example, more soluble than locust bean gum.

Gum ghatti is a natural gum obtained from Indian tree, *Anogeissus latifolia.*

Gum tragacanth is a viscous, odorless, tasteless, water-soluble mixture of polysaccharides obtained from sap which is drained from the root of several species of Middle Eastern legumes of the genus *Astragalus,* including A. *adscendens,* A. *gummifer,* and A. *tragacanthus.*

Karaya gum, is a vegetable gum produced as an exudate by trees of the genus Sterculia. It is an acid polysaccharide composed of the sugars galactose, rhamnose and galacturonic acid.

Tara gum, is a white or beige, nearly odorless powder that is produced by separating and grinding the endosperm of C. spinosa seeds. The major component of the gum is a galactomannan polymer similar to the main components of guar and locust bean gums.

Fenugreek gum,consists of D-mannopyranose and D-galactopyranose residues with a molar ratio of 1.2:1.0. The main chain of this galactomannan comprises β-(1,4)-linked D-mannopyranose residues, in which 83.3% of the main chain is substituted at C-6 with a single residue of α-(1,6)-D-galactopyranose. The galactomannan is made up of about 2,000 residues. Fenugreek gum (seed endosperm) contains 73.6% galactomannan.

Locust bean gum is a galactomannan similar to guar gum. It is polydisperse, non-ionic, and is made up of about 2,000 residues. Locust bean gum is less soluble and less viscous than guar gum and is soluble in hot water.

Preferably the at least two texturing agents are a mixture of a) gelatin and b) xanthan gum and/or locust bean gum.

The texturing agents are present in an amount of 10% w/w to 40% w/w, preferably 15% w/w to 25% w/w based on dry weight of confectionery product. The majority of the weight percent of the texturing agents is gelatin, whereas xanthan gum and/or locust bean gum are present in a maximum amount of 0.25% w/w based on dry weight of confectionery product.

Preferably the confectionery product is comprising
a) 5-12% w/w gelatin
b) 0.01-0.25% w/w xanthan gum, locust bean gum or a mixture of both

The confectionery product is further comprising a high intensity sweetener.
A high-intensity sweetener, which can be used as non-nutritive sweetener can be selected from the group consisting of aspartame, acesulfame salts such as acesulfame-K, saccharins (e.g. sodium and calcium salts), cyclamates (e.g. sodium and calcium salts), sucralose, alitame, neotame, steviosides, glycyrrhizin, neohesperidin dihydrochalcone, monellin, thaumatin, brazzein, mixtures of two or more thereof, and the like. Actually any other natural derived high-intensity sweetener is suitable as well, preferably stevia is applied in the current invention.

The confectionery product is further comprising a polyol.
A polyol in context of the current invention is selected among the tetritols, pentitols, hexitols, hydrogenated disaccharides, hydrogenated trisaccharides, hydrogenated tetrasaccharides, hydrogenated maltodextrins and mixtures thereof.
More specifically the polyol can be selected from the group consisting of erythritol, threitol, arabinitol, xylitol, ribitol, allitol, altritol, gulitol, galactitol, mannitol, sorbitol, talitol, maltitol, isomaltitol, isomalt, lactitol, and mixtures thereof. Preferably the polyol is maltitol, sorbitol, isomalt or a mixture of two or more thereof.

The confectionery of the current invention may further comprise flavours, and/or colouring agents.
Examples of flavours include flavours, and/or extracts and/or aromatic oils, essential oils derived from fruits and berries (e.g. Banana, raspberries, apple, mango, papaya, citrus and the like), vegetables (e.g.; cucumber, rhubarb, tomato, carrot, asparagus etc.), nuts (e.g. hazel nuts, almonds, pine nuts, cashew nuts, and the like), spices (e.g; basil, cardamom, cinnamon, thyme, and the like), flowers (e.g. Rose, elder flower, lavender, and the like), herbs (e.g. basil, rosemary, dill and the like), roots (e.g. liquorice), plants (e.g. vanilla, mint, fir, tea, and the like), as well as various other sources (e.g.; propolis, and honey). Flavours further more comprise ingredient flavours such as cocoa, chocolate, caramel, caramel essence, nougat, nougat essence, marzipan, almond essence, oils, liquor, brandy, rum, port, whiskey, wine and the like.
Typical examples of flavours are selected from mint flavour, chocolate mint flavour, bubblegum flavour, apple spice flavour, black cherry flavour, pineapple flavour, cola flavour, grape flavour, cherry flavour, apple flavour and citrus flavours such as orange flavour, lemon flavour, lime flavour, fruit punch and mixtures of two or more thereof. The amount of flavour depends upon the flavour or flavours selected, the flavour impression desired and the form of flavour used.

If desired, colouring agents can also be added as well. Food colours are substances that are added to change colour or to obtain brightly and deliciously coloured products. People associate certain colours with certain flavours and the colour can influence the perceived flavour. For this reason, food manufacturers add dyes to the products. Any water-soluble colouring agent approved for food use can be utilized for the current invention. Natural colours extracted from e.g. plants, vegetables, fruits, and/or insects are preferred in connection with the current invention.

The current invention further relates to a gummy confectionery product (= jelly) comprising
a) 60 to 90% w/w polydextrose
b) 5-12% w/w gelatin
c) 0.01-0.25% w/w xanthan gum, locust bean gum, or mixture of both
d) 0.020 to 0.10% w/w stevia
More specifically it relates to a confectionery product further comprising 1-9.2% w/w polyol, preferably maltitol. The current invention relates to a confectionery product, preferably a gummy confectionery product, comprising
a) 60 to 90% w/w polydextrose
b) 5-12% w/w gelatin
c) 0.01-0.25% w/w xanthan gum
d) 0.01 to 0.25% w/w locust bean gum
e) 0.020 to 0.10% w/w stevia
f) 1-9.2% w/w polyol, preferably maltitol

The preferred confectionery product, i.e. jelly has a moisture content of 12-20%. This is different from the moisture content in chewy candy, which is about 6 to 10%.

The current invention further relates to a process for preparing the confectionery product of the current invention and the process is comprising the following steps:
a) Mixing polydextrose and texturing agents,
b) Cooking the mixture
c) Depositing the cooked mixture into desired moulds

After depositing in moulds, the confectionery product is stored at room temperature, there is no further drying step at elevated temperature (50-60°C) to remove the residual moisture content.
The process is further characterised in that in step a), or before step b) a high intensity sweetener, and/or polyol, is added.

Finally the current disclosure relates to a dry mix comprising polydextrose, and at least two texturing agents selected from a group consisting of gelatin, microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum. And characterized in that polydextrose is present in an amount of 60 to 90% w/w on dry weight and texturing agents in an amount of 10 to 40% w/w on dry weight, preferably the at least two texturing agents are a) gelatin and b) xanthan gum, locust bean gum or a mixture of both.

Furthermore, the current disclosure relates to a dry mix comprising
a) 5-12% w/w gelatin
b) 0.01 to 0.25% w/w xanthan gum, locust bean gum or a mixture of both.

The current disclosure relates to the dry mix which is further comprising a high intensity sweetener, preferably a natural sweetener, more preferably the natural sweetener is stevia.

The invention will hereunder be illustrated in the form of the following examples.

### Examples

### Example 1

### Recipe

| % on dry base | |
|---|---|
| Water | 0.00 |
| Gelatin 250 bl | 10.49 |
| | |
| Polydextrose powder | 89.15 |
| Xanthan CX 910 | 0.15 |
| Locust bean gum | 0.15 |
| | |
| Stevia | 611 ppm |

### Processing:

### A Gelatin solution

Take 16 kg of hot water 90°C and add 8.075 kg gelatin in it.
Dissolve the gelatin at high speed mixing and keep it at
a temperature of 60-70°C in a holding tank.

### B Powder blend

Take 0.115 kg of Xanthan, 0.115 kg of Locust bean gum and
5 kg of polydextrose powder and mix this very well.

### Premix

Take Solution **A the 27.075 kg gelatin solution** and put this in a premix tank.
Keep or bring the premix tank to a temperature of 70°-80°C

Add all the rest of the polydextrose 54.97 kg into the premix keeping the temperature at 70°C and keep stirring till all the polydextrose powder is dissolved.
Now we can add **B** the **Powder blend** 5.23 kg Xanthan / LBG and polydextrose untill all the ingredients are dissolved.
Keep the temperature of the premix at 70-80°C.

Cooking is done by heat exchanger
Cooking temperature of the mass is between 100-140°C depending on the speed of cooking Brix after cooking is 75-82°
Temperature of the cooked mass is between 80-120°C

Addition of Stevia, in solution or in powder is possible but not necessary if it is already done at the premix
Colour, flavor and acid are added to the cooked mass

### Depositing

Deposit the mass into the desired moulds and let them jellify for the next 24-48 hours at a Temperature of 15-25°C RH of 30-70%.
Depositing temperature is between 60-95°C

### Demould and packaging

Demould the products after this setting time and polish them with a polishing agent. Store the products 6-8 hours in trays for stabilizing.
Pack the products into the desired package.

The calorie reduction is 44.63%.

## Claims

1. A confectionery product containing polydextrose **characterized in that** it further comprises at least two texturing agents selected from a group consisting of a) gelatin, and b) xanthan gum and/or locust bean gum, and **in that** polydextrose is present in an amount of 60 to 90% w/w on dry weight and texturing agents in an amount of 10 to 40% w/w on dry weight, and **in that** the confectionery product is comprising 5-12% w/w gelatin and 0.01-0.35% w/w xanthan gum and/or locust bean gum, wherein the confectionery product is a soft and/or chewable and/or gummy like sweet candy product, preferably a gum, a jelly or a liquorice.

2. The confectionery product according to claim 1 wherein the confectionery product is further comprising a high intensity sweetener, preferably a natural sweetener, more preferably stevia.

3. A confectionery product according to anyone of claims 1 or 2 comprising
a) 60 to 90% w/w polydextrose
b) 5-12% w/w gelatin
c) 0.01 to 0.25% w/w xanthan gum and/or locust bean gum
d) 0.020 to 0.70% w/w stevia.

4. A confectionery product according to claim 3 further comprising
a) 1.0-9.2% w/w polyol, preferably maltitol.

5. A process for preparing a confectionery product according to anyone of claim 1 to 4 and the process is comprising the following steps:
a) Mixing polydextrose and texturing agents,
b) Cooking the mixture
c) Depositing the cooked mixture into desired moulds.

6. The process according to claim 5 wherein high intensity sweetener, and/or polyol, is added in step a), or before step b).

## Patentansprüche

1. Süßwarenprodukt, das Polydextrose enthält, **dadurch gekennzeichnet, dass** es weiter mindestens zwei Texturierungsmittel umfasst, die aus einer Gruppe ausgewählt sind, die aus a) Gelatine und b) Xanthangummi und/oder Johannisbrotkernmehl besteht, und dass Polydextrose in einer Menge von 60 bis 90 % Gew./Gew. auf das Trockengewicht und Texturierungsmittel in einer Menge von 10 bis 40 % Gew./Gew. auf das Trockengewicht vorliegt, und dass das Süßwarenprodukt 5-12 % Gew./Gew. Gelatine und 0,01-0,35 % Gew./Gew. Xanthangummi und/oder Johannisbrotkernmehl umfasst, wobei das Süßwarenprodukt ein weiches und/oder kaubares und/oder gummiartiges Süßigkeitsprodukt, vorzugsweise ein Gummi, ein Gelee oder eine Lakritze ist.

2. Süßwarenprodukt nach Anspruch 1, wobei das Süßwarenprodukt weiter einen hochintensiven Süßstoff, vorzugsweise einen natürlichen Süßstoff, bevorzugter Stevia, umfasst.

3. Süßwarenprodukt nach einem der Ansprüche 1 oder 2, umfassend
a) 60 bis 90 % Gew./Gew. Polydextrose
b) 5-12 % Gew./Gew. Gelatine
c) 0,01 bis 0,25 % Gew./Gew. Xanthangummi und/oder Johannisbrotkernmehl
d) 0,020 bis 0,70 % Gew./Gew. Stevia.

4. Süßwarenprodukt nach Anspruch 3, weiter umfassend
a) 1,0-9,2 % Gew./Gew. Polyol, vorzugsweise Maltit.

5. Verfahren zur Herstellung eines Süßwarenprodukts nach einem der Ansprüche 1 bis 4 und wobei das Verfahren die folgenden Schritte umfasst:
a) Mischen von Polydextrose und Texturierungsmitteln,
b) Kochen des Gemisches
c) Ablegen des gekochten Gemisches in die gewünschten Formen.

6. Verfahren nach Anspruch 5, wobei hochintensiver Süßstoff und/oder Polyol in Schritt a) oder vor Schritt b) zugegeben wird.

## Revendications

1. Produit de confiserie contenant du polydextrose **caractérisé en ce qu'**il comprend en outre au moins deux agents de texture choisis dans un groupe constitué de a) gélatine et b) gomme de xanthane et/ou gomme de caroube, et **en ce que** le polydextrose est présent en une quantité de 60 à 90% p/p sur poids sec et les agents de texture en une quantité de 10 à 40% p/p sur poids sec, et **en ce que** le produit de confiserie comprend 5-12% p/p de gélatine et 0,01-0,35% p/p de gomme de xanthane et/ou de gomme de caroube, le produit de confiserie étant un produit bonbon sucré de type mou et/ou pouvant être mâché et/ou gommeux, de préférence une gomme, un gélifié ou un réglisse.

2. Produit de confiserie selon la revendication 1, dans lequel le produit de confiserie comprend en outre un édulcorant à haute intensité, de préférence un édulcorant naturel, de préférence encore le stévia.

3. Produit de confiserie selon l'une quelconque des revendications 1 ou 2, comprenant
a) 60 à 90% p/p de polydextrose
b) 5-12% p/p de gélatine
c) 0,01 à 0,25% p/p de gomme de xanthane et/ou de gomme de caroube
d) 0,020 à 0,70% p/p de stévia.

4. Produit de confiserie selon la revendication 3, comprenant en outre
a) 1,0 à 9,2% p/p de polyol, de préférence de maltitol.

5. Procédé de préparation d'un produit de confiserie selon l'une quelconque des revendications 1 à 4 et le procédé comprenant les étapes suivantes :
a) le mélange du polydextrose et des agents texturants,
b) la cuisson du mélange
c) le dépôt du mélange cuit dans des moules souhaités.

6. Procédé selon la revendication 5 dans lequel de l'édulcorant à haute intensité, et/ou un polyol, est ajouté à l'étape a) avant l'étape b)
